# EUROPÄISCHE PATENTSCHRIFT

(11) **EP 2 532 039 B1**
(45) Veröffentlichungstag und Bekanntmachung des Hinweises auf die Patenterteilung: **08.07.2015**
(21) Anmeldenummer: 11702587.4
(22) Anmeldetag: 04.01.2011
(51) Int. Cl.: H01M 2/12, H01M 2/04, H01M 2/02, H01M 10/052

(54) **BATTERIEZELLE MIT EINEM SICHERHEITSVENTIL ZUR ENTLÜFTUNG UND VERFAHREN ZUR HERSTELLUNG EINES SICHERHEITSVENTILS IN EINEM BATTERIEGEHÄUSE**
BATTERY CELL COMPRISING A SAFETY VALVE FOR VENTING AND METHOD FOR PRODUCING A SAFETY VALVE IN A BATTERY HOUSING
ÉLÉMENT DE BATTERIE PRÉSENTANT UNE SOUPAPE DE SÛRETÉ POUR LA VENTILATION ET PROCÉDÉ DE PRODUCTION D'UNE SOUPAPE DE SÛRETÉ DANS UN BOÎTIER DE BATTERIE

(30) Priorität: 03.02.2010 DE 102010001533
(43) Veröffentlichungstag der Anmeldung: 12.12.2012
(73) Patentinhaber: Samsung SDI Co., Ltd., Gyeonggi-do (KR); Robert Bosch GmbH, 70442 Stuttgart (DE)
(72) Erfinder: STRAUB, Matthias, 71711 Steinheim (DE)
(74) Vertreter: Bee, Joachim
(86) Internationale Anmeldenummer: PCT/EP2011/050044
(87) Internationale Veröffentlichungsnummer: WO 2011/095369

(56) Entgegenhaltungen:
- EP-A1- 1 168 468
- EP-A1- 2 273 584
- EP-A2- 1 321 993
- JP-A- 10 261 391
- US-A- 6 159 631
- US-A1- 2005 069 760
- US-A1- 2009 047 572
- US-B1- 6 696 196

## Beschreibung

Die vorliegende Erfindung betrifft eine Batteriezelle, insbesondere eine Li-Ionen-Batteriezelle mit einem Sicherheitsventil zur Entlüftung der Batterie sowie ein Verfahren zur Herstellung eines Sicherheitsventils im Gehäuse einer Batterie. Gegenstand der Erfindung ist auch ein Batteriesystem sowie ein Kraftfahrzeug mit einem Batteriesystem.

### Stand der Technik

Für die Zukunft ist sowohl bei stationären Anwendungen, wie z. B. Windkraftanlagen, Notstromaggregaten oder Inselnetzen, als auch in Fahrzeugen, wie beispielsweise Hybrid- oder reinen Elektrofahrzeugen, zu erwarten, dass vermehrt Batteriesysteme zum Einsatz kommen werden, an die hohe Anforderungen bezüglich nutzbarem Energieinhalt, Lade-Entlade-Wirkungsgrad und Zuverlässigkeit gestellt werden.

Batterien, insbesondere in Hybrid- oder Elektrofahrzeugen, sind hohen Sicherheitsanforderungen unterworfen. Sie erfordern die Ausstattung mit bestimmten Sicherheitsvorrichtungen, um gefährliche Fehlfunktionen zu vermeiden. So benötigen Batteriezellen, beispielsweise Lithium-Ionen-Zellen, als eine der konstruktiven Sicherheitsmaßnahmen eine Entgasungsöffnung, da bestimmte Betriebszustände zu einem Überdruck in der Zelle führen können. Um eine Explosion in der Batteriezelle zu vermeiden, müssen die unter Druck stehenden Gase entweichen können. Ein Sicherheitsventil verhindert dann einen zu hohen Druckanstieg im Inneren der Batteriezelle und dient damit dem Explosionsschutz. Bei eventuellem Versagen der Sicherheitsabschaltungen und entstehendem Überdruck öffnet sich das Sicherheitsventil und lässt Gas ab. Bekannt ist es, Entgasungsöffnungen an der Oberseite der Zellmodule, also der Seite, an der auch die Pole positioniert sind, anzuordnen. Eine solche Anordnung ist aus EP 1 933 403 A2 bekannt, die eine spezielle Form der Entgasungsöffnung vorschlägt. Die Anordnung eines Ventils im Deckel kann konstruktiv so gelöst werden, dass ein abgestuftes Loch in den Deckel gefräst wird. In diese Stufe wird ein Ventildeckel eingelegt und anschließend mit dem Batteriegehäuse verschweißt. Hierzu sind jedoch eine Vielzahl von Prozessschritten sowie verschiedene Bauteile von Nöten, die die Herstellung verkomplizieren bzw. verteuern.

Ferner ist aus der DE 34 43 453 A1 bekannt, Löcher zur Formung einer Entlüftungsöffnung eines galvanischen Elementes auszubilden. Dabei besteht ein Gehäuse des galvanischen Elementes aus zwei einseitig geschlossenen Metallzylindern, welche unter Zwischenlage einer Isolierung im Presssitz aufeinander geschoben werden. Im Inneren des einen Zylinders ist die Wand durch Löcher durchbrochen. Die Löcher werden nach außen von dem zweiten Zylinder verdeckt. Durch diese Löcher kann infolge eines Druckanstieges im Inneren der galvanischen Zelle der äußere Zylinder nach oben gedrückt werden und somit die Löcher zur Entlüftung freigegeben werden. Zur Herstellung des Gehäuses aus zwei Zylindern ist jedoch eine hohe Präzision und eine Vielzahl von Prozessschritten notwendig. Zudem ist es schwierig, den Druckbereich, bei dem eine Entlüftung auftreten soll, präzise zu definieren.

Weiter offenbart die US20090047572A1 ein durch mehrere Sacklöcher geformtes Sicherheitsventil einer Batterie. Der Abstand zwischen den Sacklöchern ist jedoch nicht offenbart.

### Offenbarung der Erfindung

Erfindungsgemäß wird eine Batteriezelle, insbesondere eine Li-Ionen-Batteriezelle zur Verfügung gestellt, welche ein Gehäuse und ein Sicherheitsventil mit einem Ventildeckel zur Entlüftung der Batteriezelle umfasst. Das Sicherheitsventil umfasst dabei eine Mehrzahl von Materialschwächungen, die in einer Wandung des Gehäuses ausgebildet sind. Der Ventildeckel wird durch die Gehäusewand selbst ausgebildet, wobei die Materialschwächungen den Ventildeckel zumindest teilweise umschließen und die Materialschwächungen beabstandet voneinander ausgebildet sind, wobei der Abstand zwischen den Mitten benachbarter Materialschwächungen kleiner als 5mm ist, bevorzugt zwischen 0,4-0,7mm liegt, noch bevorzugter zwischen 0,5-0,6mm liegt.

Das Sicherheitsventil öffnet dabei bei Überschreiten eines Druckschwellenwertes im Inneren der Batterie den Ventildeckel und somit die Gehäusewandung selbst.

Die Erfindung hat den Vorteil, dass zur Ausbildung des Sicherheitsventils keine weiteren Bauteile von Nöten sind. Ein separater Ventildeckel entfällt. Das Sicherheitsventil wird durch die Wandung des Gehäuses selbst ausgebildet, Sicherheitsventil und Gehäusedeckel bzw. Gehäusewandung sind einstückig ausgebildet. Der Ventildeckel ist ein vordefinierter Bereich der Wandung des Gehäuses. Somit können bei der Herstellung vorteilhafterweise Prozessschritte eingespart und die Herstellungskosten verringert werden.

Durch Veränderung der Abstände der Materialschwächungen voneinander kann die benötigte Aufreißkraft zur Ausbildung der Entlüftungsöffnung verändert werden. Ein kleinerer Abstand erfordert den Einsatz einer kleineren Aufreißkraft als ein größerer Abstand.

Bevorzugt sind die Materialschwächungen auf einem gesamten Umfang des Ventildeckels verteilt. Durch Ausbildung der Materialschwächungen entlang des gesamten Umfangs kann eine Entlüftungsöffnung im Bereich der Wandung vollständig ausgebildet werden. Der von den Materialschwächungen umgebene Bereich, der Ventildeckel, wird dabei durch einen Druck im Inneren der Batteriezelle herausgedrückt oder herausgesprengt und von der Batterie separiert. Es entsteht eine Öffnung im Gehäuse, durch die Gas entweichen kann.

In einem anderen Ausführungsbeispiel sind die Materialschwächungen in mindestens einem zusammenhängenden Bereich des Umfangs der vordefinierten Fläche nicht ausgebildet. Vorteilhafterweise kann somit eine Art von Scharnier ausgebildet werden. Das Material der Gehäusewandung wird nicht vollständig herausgelöst, sondern bleibt in dem Bereich, in dem die Materialschwächungen nicht ausgebildet sind, mit dem Gehäuse verbunden.

In bevorzugter Ausführungsform weist das Gehäuse einen Deckel auf. Die Materialschwächungen sind im Gehäusedeckel, bevorzugt in der dem Inneren des Gehäuses zugewandten Seite des Deckels ausgebildet.

Die Erfindung hat somit den weiteren Vorteil, dass in der äußeren Oberfläche der Batterie die Sicherheitseinrichtung nicht sichtbar ist und die Oberfläche auf der Außenseite eine gleiche Struktur aufweist. Da das Sicherheitsventil durch die Gehäusewandung selbst ausgebildet wird und dies bevorzugt im Inneren geschieht, ist im Bereich des Sicherheitsventils von außen nur eine homogene Oberfläche des Batteriegehäuses zu sehen.

Die Restwandstärke der Wandung im Bereich der Materialschwächung ist größer 0% und beträgt bevorzugt weniger als 20% der umgebenden Gehäusewandstärke, bevorzugter weniger als 10%, noch bevorzugter weniger als 5%.

Vorteilhafterweise kann durch Veränderung der Restwandstärke unter der Materialschwächung die benötigte Aufreißkraft zur Ausbildung der Entlüftungsöffnung verändert werden. Eine kleinere Restwandstärke erfordert den Einsatz einer kleineren Aufreißkraft als eine größere Restwandstärke bei gleichem Gehäusematerial.

Vorteilhafterweise kann durch Veränderung der Abstände der Materialschwächungen voneinander die benötigte Aufreißkraft zur Ausbildung der Entlüftungsöffnung verändert werden. Ein kleinerer Abstand erfordert den Einsatz einer kleineren Aufreißkraft als ein größerer Abstand.

Die Materialschwächungen können aber auch überlappend ausgebildet sein. Da die Materialschwächungen eine Restwandstärke zurücklassen, wird auch bei überlappender Ausbildung der Materialschwächungen die Gehäusewand nicht ohne eine zusätzliche Kraft geöffnet. Durch Überlappung der Materialschwächungen kann der Wert der nötigen Aufreißkraft weiter verringert werden.

In bevorzugter Ausführungsform sind die Materialschwächungen als Sacklöcher ausgebildet. Sacklöcher sind vorteilhafterweise sehr einfach in einer Wandung auszubilden.

Die Sacklöcher können einen Durchmesser von 0,09-0,25mm, insbesondere 0,15-0,2mm aufweisen.

Vorteilhafterweise kann auch durch den Durchmesser der Sacklöcher die nötige Aufreißkraft variiert werden. Ein kleinerer Durchmesser macht eine größere Kraft zur Ausbildung der Entlüftungsöffnung nötig. Ferner kann durch einen kleineren Durchmesser der Umfang des Ventildeckels noch genauer definiert werden.

Entsprechend wird ein Verfahren zur Herstellung eines Sicherheitsventils in einem Gehäuse einer Batteriezelle angegeben, welches die folgenden Schritte umfasst: Einstellung eines Laserpulses derart, dass der Laserpuls in einer Gehäusewandung der Batteriezelle Materialschwächungen mit einer vordefinierten Restwandstärke ausbildet (Schritt S1). Es folgt ein Schritt S2 der Definition eines als Ventildeckel dienenden Bereichs der Wandung des Gehäuses. Daraufhin wird im Schritt S3 die Peripherie des als Ventildeckel dienenden Bereichs der Wandung des Gehäuses mit einer Mehrzahl von derartig eingestellten diskreten Laserpulsen bestrahlt. Im Schritt S4 werden die Laserpulse derart geführt, dass ihre Auftreffpunkte den als Ventildeckel dienenden Bereich der Gehäusewandung zumindest teilweise umschließen. Letztlich werden dadurch im Schritt S5 Materialschwächungen in der Peripherie des als Ventildeckel dienenden Bereichs ausgebildet, wobei die Materialschwächungen beabstandet voneinander ausgebildet sind, und der Abstand zwischen den Mitten benachbarter Materialschwächungen kleiner als 5mm ist, bevorzugt zwischen 0,4-0,7mm liegt, noch bevorzugter zwischen 0,5-0,6mm liegt.

Zur Ausbildung der Materialschwächungen ist somit lediglich die Bestrahlung der Gehäusewand mit entsprechend eingestellten Laserpulsen nötig. Das Verfahren zur Herstellung eines Sicherheitsventils ist somit einfach, schnell und kostengünstig.

Ferner lässt sich durch die Vielzahl der zur Verfügung stehenden Parameter wie Restwandstärke, Ausdehnung der Materialschwächung, Abstand der Materialschwächungen, Ausdehnung der Ventildeckelfläche sowie Dauer, Intensität und Wellenlänge eines Laserimpulses zur Ausbildung der Materialschwächungen der Druckwert, bei dem sich das Sicherheitsventil öffnet, genau einstellen.

Ferner wird ein Batteriesystem angegeben, welches mindestens eine erfindungsgemäße Batteriezelle umfasst. Ebenso wird ein Kraftfahrzeug mit einer erfindungsgemäßen Batteriezelle und/oder einem erfindungsgemäßen Batteriesystem vorgeschlagen, insbesondere ein Hybrid- oder Elektrofahrzeug, wobei die Batteriezelle und/oder das Batteriesystem mit dem Antriebsmotor verbunden sind. Insbesondere bei Hybrid- oder Elektrofahrzeugen ist eine erfindungsgemäße Sicherheitseinrichtung wegen der hohen Sicherheitsanforderungen vorteilhaft.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 eine Batteriezelle des Standes der Technik,
Figur 2 ein Sicherheitsventil des Standes der Technik, gesehen von der Gehäuseinnenseite (links) und im Querschnitt (rechts),
Figur 3 einen Gehäusedeckel einer Batterie des Standes der Technik mit einem geschlossenen Ventil in einer Außenansicht,
Figur 4 einen Gehäusedeckel einer Batterie des Standes der Technik mit einem geöffneten Ventil in einer Außenansicht,
Figur 5 eine Gehäusewand mit einer erfindungsgemäßen Sicherheitseinrichtung in einem ersten Ausführungsbeispiel,
Figur 6 eine Außenansicht einer erfindungsgemäßen Batteriezelle gemäß dem ersten Ausführungsbeispiel,
Figur 7 eine Gehäusewand mit einer erfindungsgemäßen Sicherheitseinrichtung in einem zweiten Ausführungsbeispiel,
Figur 8 einen vertikalen Schnitt durch die Gehäusewand im Bereich des erfindungsgemäßen Sicherheitsventils.

### Ausführungsformen der Erfindung

Die vorliegende Erfindung betrifft eine Batteriezelle, insbesondere eine Li-Ionen-Batteriezelle mit einer Sicherheitseinrichtung oder einem Sicherheitsventil zur Entlüftung der Batteriezelle.

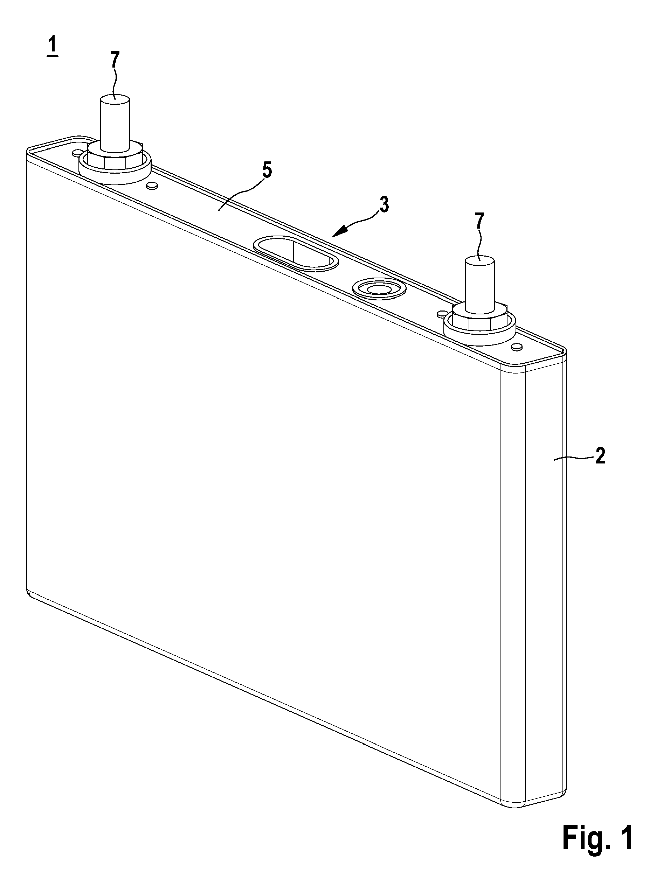

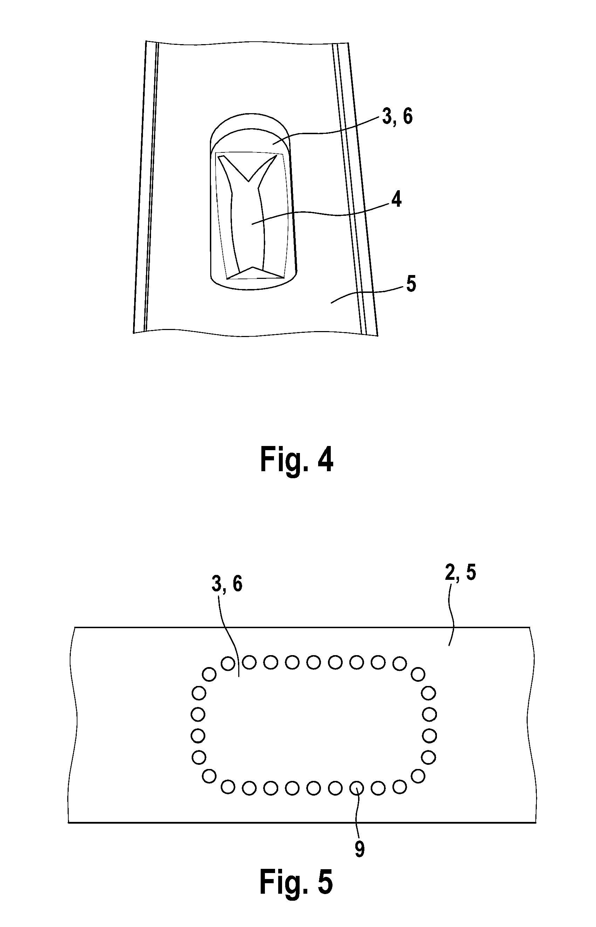

In der Figur 1 ist zunächst eine Batteriezelle 1 des Standes der Technik gezeigt. Die Batteriezelle 1 umfasst ein Gehäuse 2 mit einem Deckel 5 und eine Sicherheitseinrichtung oder ein Sicherheitsventil 3 zur Ausbildung einer Entlüftungsöffnung 4 (siehe Figur 4). Im Gehäusedeckel 5 sind neben dem Sicherheitsventil 3 die Anschlüsse 7 der Batterie 1 angeordnet. Die Entlüftungsöffnung des Sicherheitsventils 3 ist zunächst geschlossen. Sie wird erst geöffnet, wenn im Inneren der Batterie 1 ein vordefinierter Druckschwellenwert übertroffen wird. Da die Entlüftungsöffnung zunächst nicht geöffnet wird, wird im Folgenden von einem "Ventil" gesprochen. Ein Ventil 3 zeichnet sich dadurch aus, dass es zwei Zustände hat. Im geschlossenen Zustand existiert keine Öffnung des Gehäuses 2 gegenüber der Umgebung. Im geöffneten Zustand existiert im Gehäuse 2 eine Öffnung zur Entlüftung des Inneren des Gehäuses 2 an die Umgebung, also zur Abführung von Gasen aus dem Inneren der Batterie 1 nach außen.

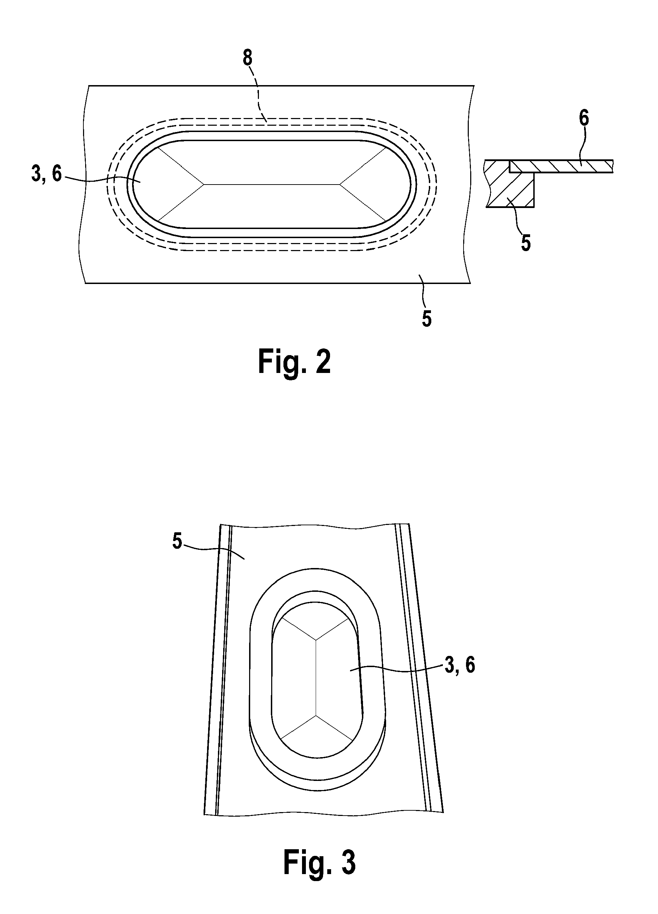

Figur 2 zeigt ein Sicherheitsventil 3 des Standes der Technik, gesehen von der Gehäuseinnenseite. Das Sicherheitsventil 3 ist im Gehäusedeckel 5 der Batterie 1 ausgebildet. Zur Herstellung des Sicherheitsventils 3 im Gehäusedeckel 5 wird zunächst ein Loch in den Gehäusedeckel 5 gefräst, welches dann mit einem separaten Ventildeckel 6 verschlossen wird. Gehäusedeckel 5 und Ventildeckel 6 werden dann miteinander verschlossen, bevorzugt mit einem Laser verschweißt, wodurch am Rande des Ventildeckels 6 eine Lasernaht 8 ausbildet wird. Der schematische Querschnitt rechts in Figur 2 zeigt, dass der Ventildeckel 6 auf dem Gehäusedeckel 5 aufliegt. Ventildeckel 6 und Gehäusedeckel 5 sind separate Bauteile, die erst miteinander verbunden werden müssen.

Figur 3 zeigt einen Gehäusedeckel 5 einer Batterie 1 des Standes der Technik mit einem geschlossenen Sicherheitsventil 3 in einer Außenansicht. Das Sicherheitsventil 3 ist von außen klar und deutlich ersichtlich. Im Bereich des Sicherheitsventils 3 befindet sich in Figur 3 eine Vertiefung, die Oberfläche des Deckels 5 weist Höhenunterschiede auf. Sicherheitsventil 3 und das Gehäuse bzw. der Gehäusedeckel 5 sind getrennte Bauteile. Der Bereich des Loches, welches zur Ausbildung des Sicherheitsventils 3 in dem Gehäusedeckel 5 geformt wurde, bleibt auch nach dem Verschließen durch den Ventildeckel 6 sichtbar, da der Deckel 5 an dieser Stelle vollständig durchtrennt wurde.

Figur 4 zeigt den Gehäusedeckel der Figur 3 mit einem geöffneten Sicherheitsventil 3 in einer Außenansicht. Es hat sich nun im Bereich des Sicherheitsventils 3 die Entlüftungsöffnung 4 gebildet. Der Ventildeckel 6 hat sich also geöffnet und die Entlüftungsöffnung 4 ausgebildet. Die Batterie wird entlüftet.

Die Herstellung eines solchen Sicherheitsventils 3 gemäß dem Stand der Technik ist jedoch aufwendig und erfordert Präzision. Zudem ist es schwierig, die Auslöseschwelle für die Öffnung des Sicherheitsventils 3 zuverlässig zu definieren.

Figur 5 zeigt nun eine Innenansicht einer Wand eines Batteriegehäuses 2 mit einem erfindungsgemäßen Sicherheitsventil 3 in einem ersten Ausführungsbeispiel. Beispielhaft, jedoch nicht beschränkend, ist die Sicherheitseinrichtung 3 im Deckel 5 des Gehäuses 2 angeordnet, bevorzugt im Innenbereich des Gehäusedeckels 5. Das Sicherheitsventil 3 kann aber auch an jeder anderen Stelle einer Gehäusewand des Gehäuses 2 ausgebildet sein. Es ist in Figur 5 lediglich ein Teilbereich des Deckels 5 ohne Anschlüsse gezeigt. Der Gehäusedeckel 5 weist ein Sicherheitsventil 3 auf, das eine Mehrzahl von Materialschwächungen 9 umfasst. Diese Materialschwächungen 9 sind hier beispielhaft kreisförmig ausgebildet. Die Materialschwächungen 9 sind in Figur 5 um eine vordefinierte Fläche herum zur Ausbildung einer Entlüftungsöffnung ausgebildet. Die vordefinierte Fläche kann die Form eines Rechtecks, eines Ovals, einer anderen geometrischen Form oder eine beliebige, geschlossene Form haben. Die vordefinierte Fläche dient zur Definition des Bereiches, in dem zumindest teilweise die Entlüftungsöffnung zu bilden ist und kann daher ohne Beschränkung im Folgenden Ventildeckel 6 genannt werden. In Figur 5 hat die zu bildende Entlüftungsöffnung 4 beispielhaft aber nicht beschränkend die Form eines Ovals. Die Materialschwächungen 9 sind auf dem Umfang des Ventildeckels 6 verteilt, bevorzugt gleichmäßig. Dies gewährleistet, dass an allen Stellen ein ähnlicher Kraftschwellenwert von Nöten ist, um die Wand des Gehäuses 2 in diesem vordefinierten Bereich zu öffnen. Es ist somit wichtig festzustellen, dass der vordefinierte Bereich als Ventildeckel 6 ein Teilbereich der Wand des Gehäuses 2 selbst ist. Er ist nicht ein separates Bauteil. Der Ventildeckel 6 ist also ein Teil der normalen Wand des Gehäuses selbst, definiert dadurch, dass er zumindest teilweise von Materialschwächungen 9 umgeben ist. Mit anderen Worten, die Wand des Gehäuses 2 umfasst das Sicherheitsventil 3. Sicherheitsventil 3 und Gehäusedeckel 6 sind einstückig ausgebildet. Die Materialschwächungen 9 bilden in der Wand des Gehäuses 2 Sollbruchstellen aus. Der von ihnen umschlossene Bereich wird durch die Sollbruchstellen bei Überschreiten eines vordefinierten Druckschwellenwertes im Inneren geöffnet und dient der Entlüftung.

Der Gehäusedeckel 5 kann dieselbe Wandstärke wie die übrigen Gehäuseseiten oder eine andere Wandstärke aufweisen. Der Gehäusedeckel 5 bzw. die Wandung, in der das Sicherheitsventil 3 ausgebildet ist, hat vor Ausbildung der Materialschwächungen 9 bevorzugt eine homogene Wandstärke.

Das Sicherheitsventil 3 nimmt bevorzugt eine Fläche zwischen 5 und 30% der Fläche des Gehäusedeckels 5 ein, noch bevorzugter zwischen 10 und 25%.

Die Ventildeckelgröße hängt von der Kapazität der Batteriezelle ab. Eine 62Ah Li-Ionen Zelle hat einen Gehäusedeckel mit einer Breite zwischen 35 und 45 mm, bevorzugt von ca. 40mm, und eine Länge von 170 bis 180 mm, bevorzugt 175mm. Der Ventildeckel misst zwischen 15 und 25mm Breite und 35 bis 60mm Länge, in einem Ausführungsbeispiel weist der Ventildeckel 6 eine Größe von ca. 16x40 mm auf.

Bevorzugt werden die Sollbruchstellen als Materialschwächungen 9 durch einen Laser in den Gehäusedeckel 5 eingebracht. Der Laser erzeugt von der Materialrückseite aus eine Schwächungslinie, bevorzugt in Form von Sacklöchern, in der gewünschten Kontur der Ventilöffnung. Eine entsprechend angepasste Sensorik verhindert das vollständige Durchdringen des Lasers durch das Material, sodass sogenannte Sacklöcher entstehen und definiert aneinander gereiht werden können, wie in Fig. 5 gezeigt. Damit wird das Material durch eine Mikroperforationslinie so geschwächt, dass es im Falle eines Druckanstiegs im Inneren der Batterie genau an dieser Stelle aufreißt. Eine Materialschwächung 9 ist hierbei eine Veränderung der Dicke des Gehäusewandmaterials im Bezug auf seine Umgebung. Das Gehäuse 2 besteht bevorzugt zunächst aus einem homogenen Material mit gleicher Dicke. Die Materialschwächung 9 wird in der Gehäusewand selbst als ein lokaler Bereich mit geringerer Dicke in diesem einen homogenen Material ausgebildet. Der Begriff Materialschwächung 9 weist von seiner Wortbedeutung darauf hin, dass Wandmaterial des Gehäuses 3 in diesem Bereich noch vorhanden ist, die Wand also nicht vollständig durchtrennt ist, sondern lediglich in ihrer Stärke geschwächt ist. Das Sicherheitsventil 3 öffnet den Ventildeckel 6 bevorzugt bei Überschreiten eines Druckschwellenwertes im Inneren der Batterie 1.

Es wird im Folgenden beschrieben, wie das Sicherheitsventil 3 in der Batterie erfindungsgemäß herzustellen ist. Das Sicherheitsventil 3 umfasst eine Laserperforation, die durch die Aneinanderreihung von diskreten Laserpulsen entlang der gewünschten Kontur des Ventildeckels 6 entsteht. Dabei wird das Wandmaterial nicht vollständig durchtrennt. Vielmehr bildet sich eine Perforation, an der das Material zu einem späteren Zeitpunkt durch mechanische Krafteinwirkung vereinzelt werden kann. Die Kraft, die dazu aufgewendet werden muss, lässt sich vorteilhafterweise mit dem Abstand der Auftreffpunkte der Laserpulse variieren. Ein größerer Abstand bedeutet dabei, dass ein größerer Kraftaufwand zur Öffnung des Ventildeckels 6 notwendig ist. Der Abstand zwischen den Mitten benachbarter Materialschwächungen 9 ist dabei bevorzugt kleiner als 5mm, liegt bevorzugter zwischen 0,3-1,0mm und noch bevorzugter zwischen 0,5-0,8mm.

Die Materialschwächungen können einen Durchmesser von 0,09-0,25mm, insbesondere 0,15-0,2mm aufweisen.

Die Laserperforation hat den Vorteil, dass die Materialschwächungen 9 sehr präzise und schnell in der Gehäusewandung geformt werden können. Bei den Materialschwankungen 9 handelt es sich bevorzugt um Sacklöcher, die durch die Lasereinwirkung in einem oberen Bereich einer Wand des Gehäuses 2 ausgebildet werden können. Dadurch, dass auf dem Gehäuse 2 der Batterie 1 üblicherweise keine weitere Schicht mehr aufgebracht wird, muss der Laser so genau eingestellt werden, dass er nicht das Material vollständig durchtrennt. Entsprechend wird ein Verfahren zur Herstellung eines Sicherheitsventils 3 in einem Gehäuse 2 einer Batteriezelle 1 angegeben, welches die folgenden Schritte umfasst: Zunächst wird im Schritt S1 ein Laserpuls derart eingestellt, dass der Laserpuls in einer Gehäusewandung der Batteriezelle 1 Materialschwächungen 9 mit einer vordefinierten Restwandstärke ausbildet. Es folgt ein Schritt S2 der Definition eines als Ventildeckel 6 dienenden Bereichs der Wandung des Gehäuses 2. Daraufhin wird im Schritt S3 die Peripherie des als Ventildeckel 6 dienenden Bereichs der Wandung des Gehäuses 2 mit einer Mehrzahl von derartig eingestellten diskreten Laserpulsen bestrahlt. Im Schritt S4 werden die Laserpulse derart geführt, dass ihre Auftreffpunkte den als Ventildeckel 6 dienenden Bereich der Gehäusewandung zumindest teilweise umschließen. Letztlich werden dadurch im Schritt S5 Materialschwächungen 9 in der Peripherie des als Ventildeckel 6 dienenden Bereichs ausgebildet.

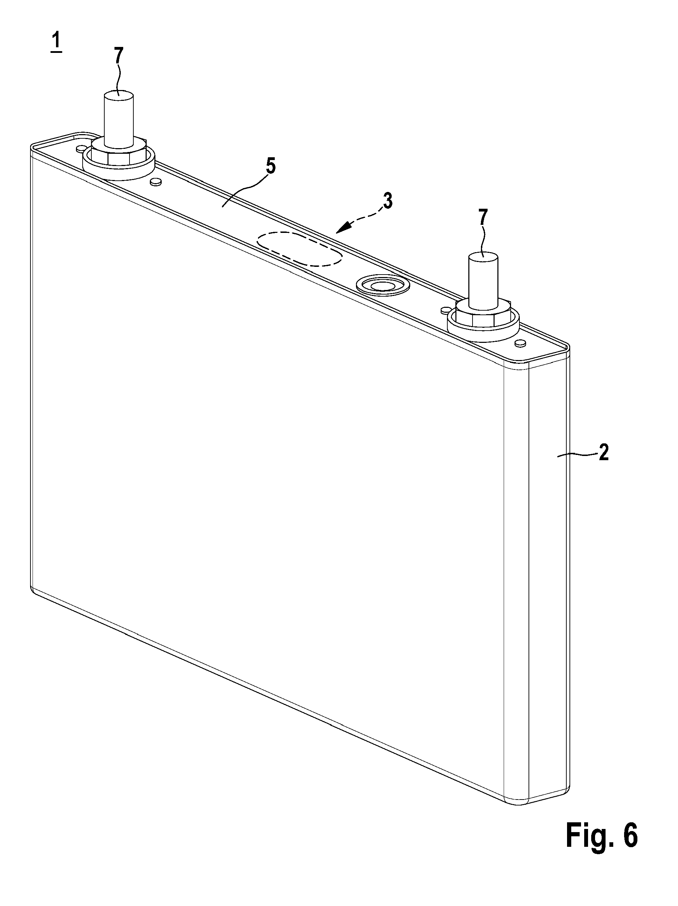

Figur 6 zeigt eine Außenansicht einer erfindungsgemäßen Batteriezelle 1 mit einem Gehäuse 2, einem Gehäusedeckel 5 und Anschlüssen 7 gemäß dem ersten Ausführungsbeispiel. Da das Sicherheitsventil 3 in der Innenwand des Gehäusedeckels 5 ausgebildet ist, ist es von außen nicht sichtbar. Der Bereich des Sicherheitsventil 3 bzw. des Ventildeckels 5 ist in Figur 6 lediglich durch eine gestrichelte Linie angedeutet. Der Gehäusedeckel 5 hat von außen eine homogene Struktur ohne Erhebungen oder Vertiefungen im Bereich des Sicherheitsventils 3.

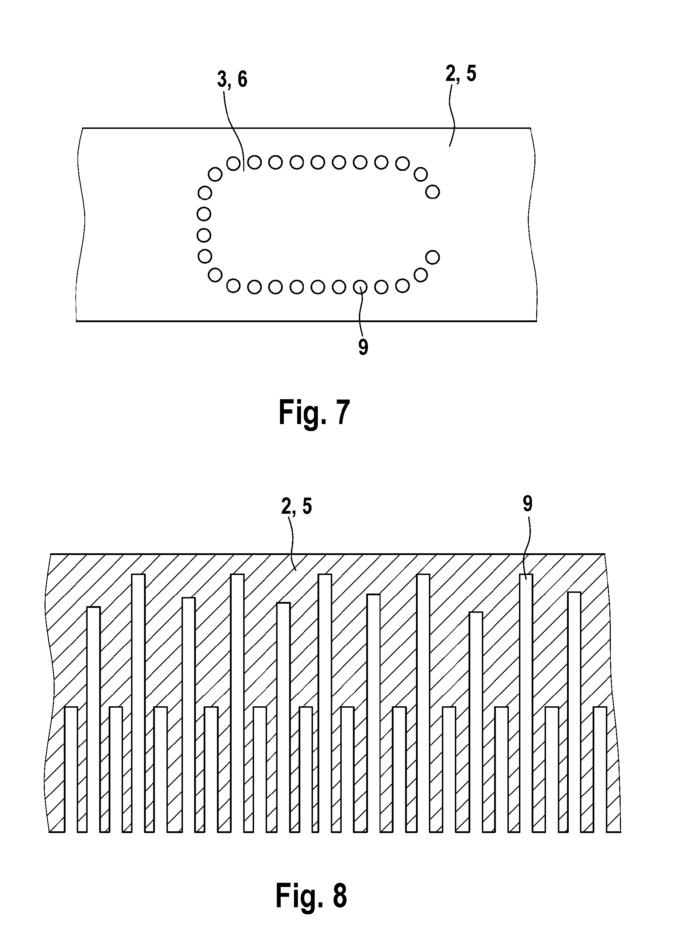

Durch einen Bereich ohne Laserperforation auf dem Umfang des Ventildeckels 6 oder der vordefinierten Fläche lässt sich ein Scharnier 10 ausbilden, welches den Ventildeckelbereich 6 bei Öffnung am Gehäuse festhält. Figur 7 zeigt eine Innenansicht einer Batteriegehäusewand mit einer erfindungsgemäßen Sicherheitseinrichtung 3 eines entsprechenden Ausführungsbeispiels. Im rechten Bereich der Kontur des Ventildeckels 6, hier beispielsweise aber nicht beschränkend oval, sind Materialschwächungen 9, im Beispiel zwei Materialschwächungen 9, ausgelassen. Im übrigen Bereich des Umfangs des Ventildeckels 6 sind die Materialschwächungen 9 homogen verteilt. Dadurch, dass in einem zusammenhängenden Bereich Materialschwächungen fehlen bzw. bei der Verteilung ausgelassen wurden, bleibt der Ventildeckel 6 beim Öffnen des Sicherheitsventils 3 mit dem Gehäuse 2, hier dem Deckel 5, verbunden. Da die Batterie im Inneren unter großem Druck steht, kann dadurch vermieden werden, dass der Ventildeckel 6 mit großer Kraft vom Gehäuse 2 abgesprengt wird.

Figur 8 zeigt einen vertikalen Schnitt durch die Gehäusewand im Bereich des erfindungsgemäßen Sicherheitsventils 3. Die obere Linie in Figur 8 ist die von außen zu betrachtende Oberfläche der Gehäusewand bzw. des Gehäusedeckels 5. Die Materialschwächungen 9 sind in der Innenwand des Gehäuses 2 ausgebildet und somit von außen nicht sichtbar. Die Materialschwächungen 9 sind bevorzugt Sacklöcher, die durch einen Laser in die Gehäusewandung der Batterie eingebracht werden. Durch Einstellung der Dauer, Wellenlänge und/oder der Energie des Lasers können die Sacklöcher präzise mit einer einstellbaren Restwandstärke ausgebildet werden. So zeigt Figur 8 Materialschwächungen 9 mit gleicher Restwandstärke, die sich mit Materialschwächungen mit kleinerer Restwandstärke abwechseln. Die Restwandstärke der Wandung beträgt im Bereich der Materialschwächung 9 mehr als 0% der umgebenden Gehäusewandstärke und weniger als 20% der umgebenden Gehäusewandstärke, bevorzugt weniger als 10%, noch bevorzugter weniger als 5%. Je geringer die Restwandstärke über den Materialschwächungen 9, desto leichter kann der Ventildeckel 6 als der Bereich, der von den Materialschwächungen 9 zumindest teilweise umgeben wird, aus dem Gehäuse 2 herausgelöst werden.

Erfindungsgemäß wird ferner ein Batteriesystem angegeben, welches mindestens eine erfindungsgemäße Batteriezelle umfasst. Ebenso wird ein Kraftfahrzeug mit einer erfindungsgemäßen Batteriezelle und/oder einem erfindungsgemäßen Batteriesystem vorgeschlagen, insbesondere ein Hybridoder Elektrofahrzeug, wobei die Batteriezelle und/oder das Batteriesystem mit dem Antriebsmotor verbunden sind. Insbesondere bei Hybrid- oder Elektrofahrzeugen ist eine erfindungsgemäße Sicherheitseinrichtung wegen der hohen Sicherheitsanforderungen vorteilhaft.

## Patentansprüche

1. Batteriezelle (1) umfassend:
ein Gehäuse (2), und
ein Sicherheitsventil (3) mit einem Ventildeckel (6) zur Entlüftung der Batteriezelle (1),
wobei
das Sicherheitsventil (3) eine Mehrzahl von Materialschwächungen (9) umfasst, die in einer Wandung des Gehäuses (2) ausgebildet sind, und
der Ventildeckel (6) durch die Gehäusewand ausgebildet wird,
wobei die Materialschwächungen (9) den Ventildeckel (6) zumindest teilweise umschließen,
**dadurch gekennzeichnet, dass**
die Materialschwächungen (9) beabstandet voneinander ausgebildet sind, wobei der Abstand zwischen den Mitten benachbarter Materialschwächungen (9) kleiner als 5mm ist, bevorzugt zwischen 0,4-0,7mm liegt, noch bevorzugter zwischen 0,5-0,6mm liegt.

2. Batteriezelle (1) nach Anspruch 1, wobei die Materialschwächungen (4) auf dem gesamten Umfang des Ventildeckels (5) ausgebildet sind, oder in mindestens einem zusammenhängenden Bereich des Umfangs des Ventildeckels nicht ausgebildet sind.

3. Batteriezelle (1) nach einem der vorhergehenden Ansprüche, wobei das Gehäuse (2) einen Gehäusedeckel (5) aufweist und die Materialschwächungen (9) im Gehäusedeckel (5), bevorzugt in der dem Inneren des Gehäuses (2) zugewandten Seite des Gehäusedeckels (5) ausgebildet sind, und der Ventildeckel (6) durch den Gehäusedeckel (5) selbst ausgebildet wird.

4. Batteriezelle (1) nach einem der vorhergehenden Ansprüche, wobei die Restwandstärke der Wandung im Bereich der Materialschwächung (9) größer 0% und weniger als 20% der umgebenden Wandstärke beträgt, bevorzugt weniger als 10%, noch bevorzugter weniger als 5%.

5. Batteriezelle (1) nach einem der vorhergehenden Ansprüche, wobei die Materialschwächungen (9) als Sacklöcher ausgebildet sind.

6. Batteriezelle (1) nach einem der vorhergehenden Ansprüche, wobei die Sacklöcher einen Durchmesser von 0,09-0,25mm, insbesondere 0,15-0,2mm aufweisen.

7. Batteriesystem, umfassend eine Batteriezelle (1) nach einem der Ansprüche 1-6.

8. Kraftfahrzeug mit einer Batteriezelle nach einem der Ansprüche 1-6 und/oder einem Batteriesystem nach Anspruch 7.

9. Verfahren zur Herstellung eines Sicherheitsventils (3) an einem Gehäuse (2) einer Batteriezelle (1), umfassend die Schritte:
(S1) Einstellung eines Laserpulses derart, dass der Laserpuls in einer Gehäusewandung der Batteriezelle (1) Materialschwächungen (9) mit einer vordefinierten Restwandstärke ausbildet,
(S2) Definition eines Ventildeckel (6) dienenden Bereichs der Wandung des Gehäuses (2);
(S3) Bestrahlung der Peripherie des als Ventildeckel (6) dienenden Bereichs der Wandung des Gehäuses (2) mit einer Mehrzahl von derartig eingestellten diskreten Laserpulsen;
(S4) Führung der Laserpulse derart, dass ihre Auftreffpunkte den als Ventildeckel (6) dienenden Bereich der Gehäusewandung zumindest teilweise umschließen, und somit
(S5) Ausbildung von Materialschwächungen (9) in der Peripherie des als Ventildeckel (6) dienenden Bereichs, **dadurch gekennzeichnet, dass** die Materialschwächungen (9) beabstandet voneinander ausgebildet sind, wobei der Abstand zwischen den Mitten benachbarter Materialschwächungen (9) kleiner als 5mm ist, bevorzugt zwischen 0,4-0,7mm liegt, noch bevorzugter zwischen 0,5-0,6mm liegt.

## Claims

1. Battery cell (1) comprising:
a housing (2), and
a safety valve (3) having a valve cover (6) for venting the battery cell (1),
wherein
the safety valve (3) has a plurality of material weak points (9) which are formed in a wall of the housing (2), and
the valve cover (6) is formed by the housing wall,
wherein the material weak points (9) at least partially surround the valve cover (6),
**characterized in that**
the material weak points (9) are formed at a distance from one another,
wherein the distance between the centres of adjacent material weak points (9) is less than 5 mm, preferably between 0.4-0.7 mm, and further preferably between 0.5-0.6 mm.

2. Battery cell (1) according to Claim 1, wherein the material weak points (9) are formed over the entire circumference of the valve cover (6) or are not formed in at least one continuous region of the circumference of the valve cover.

3. Battery cell (1) according to either of the preceding claims, wherein the housing (2) has a housing cover (5), and the material weak points (9) are formed in the housing cover (5), preferably in that side of the housing cover (5) which faces the interior of the housing (2), and the valve cover (6) is formed by the housing cover (5) itself.

4. Battery cell (1) according to one of the preceding claims, wherein the residual wall thickness of the wall in the region of the material weak point (9) is greater than 0% and less than 20% of the surrounding wall thickness, preferably less than 10%, further preferably less than 5%.

5. Battery cell (1) according to one of the preceding claims, wherein the material weak points (9) are in the form of blind holes.

6. Battery cell (1) according to one of the preceding claims, wherein the blind holes have a diameter of 0.09-0.25 mm, in particular 0.15-0.2 mm.

7. Battery system comprising a battery cell (1) according to one of Claims 1-6.

8. Motor vehicle having a battery cell according to one of Claims 1-6 and/or a battery system according to Claim 7.

9. Method for producing a safety valve (3) on a housing (2) of a battery cell (1), comprising the steps of:
(S1) setting a laser pulse in such a way that the laser pulse forms material weak points (9) with a predefined residual wall thickness in a housing wall of the battery cell (1),
(S2) defining a region of the wall of the housing (2), which region serves as valve cover (6);
(S3) emitting a plurality of discrete laser pulses, which are set in such a way, onto the periphery of that region of the wall of the housing (2) which serves as valve cover (6);
(S4) guiding the laser pulses in such a way that their impact points at least partially surround that region of the housing wall which serves as valve cover (6), and therefore
(S5) forming material weak points (9) in the periphery of the region which serves as valve cover (6), **characterized in that** the material weak points (9) are formed at a distance from one another, wherein the distance between the centres of the adjacent material weak points (9) is less than 5 mm, preferably between 0.4-0.7 mm, and further preferably between 0.5-0.6 mm.

## Revendications

1. Élément de batterie (1) comportant :
un boîtier (2), et
une soupape de sûreté (3) comprenant un couvercle de soupape (6) pour la ventilation de l'élément de batterie (1),
la soupape de sûreté (3) comportant une pluralité d'affaiblissements de matériau (9) qui sont formés dans une paroi du boîtier (2), et
le couvercle de soupape (6) étant formé par la paroi de boîtier,
les affaiblissements de matériau (9) entourant au moins partiellement le couvercle de soupape (6),
**caractérisé en ce que**
les affaiblissements de matériau (9) sont formés de manière espacée les uns des autres, la distance entre les centres d'affaiblissements de matériau adjacents (9) étant inférieure à 5 mm, de préférence se situant entre 0,4 et 0,7 mm, de manière encore plus préférée se situant entre 0,5 et 0,6 mm.

2. Élément de batterie (1) selon la revendication 1, dans lequel les affaiblissements de matériau (9) sont formés sur toute la circonférence du couvercle de soupape (6), ou ne sont pas formés dans au moins une région d'un seul tenant de la circonférence du couvercle de soupape.

3. Élément de batterie (1) selon l'une quelconque des revendications précédentes, dans lequel le boîtier (2) comprend un couvercle de boîtier (5) et les affaiblissements de matériau (5) sont formés dans le couvercle de boîtier (5), de préférence dans le côté du couvercle de boîtier (5) tourné vers l'intérieur du boîtier (2), et le couvercle de soupape (6) est formé par le couvercle de boîtier (5) lui-même.

4. Élément de batterie (1) selon l'une quelconque des revendications précédentes, dans lequel l'épaisseur résiduelle de la paroi dans la région de l'affaiblissement de matériau (9) vaut plus de 0 % et moins de 20 % de l'épaisseur de paroi environnante, de préférence moins de 10 %, de manière encore plus préférée moins de 5 %.

5. Élément de batterie (1) selon l'une quelconque des revendications précédentes, dans lequel les affaiblissements de matériau (9) sont formés en tant que trous borgnes.

6. Élément de batterie (1) selon l'une quelconque des revendications précédentes, dans lequel les trous borgnes présentent un diamètre de 0,09 à 0,25 mm, en particulier de 0,15 à 0,2 mm.

7. Système de batterie, comportant un élément de batterie (1) selon l'une quelconque des revendications 1 à 6.

8. Véhicule automobile comprenant un élément de batterie selon l'une quelconque des revendications 1 à 6 et/ou un système de batterie selon la revendication 7.

9. Procédé de production d'une soupape de sûreté (3) sur un boîtier (2) d'un élément de batterie (1), comportant les étapes de :
(S1) réglage d'une impulsion laser de telle sorte que l'impulsion laser forme, dans une paroi de boîtier de l'élément de batterie (1), des affaiblissements de matériau (9) présentant une épaisseur résiduelle de paroi prédéfinie,
(S2) définition d'une région de la paroi du boîtier (2), laquelle région sert de couvercle de soupape (6) ;
(S3) irradiation de la périphérie de la région de la paroi du boîtier (2) servant de couvercle de soupape (6) avec une pluralité d'impulsions laser distinctes réglées de cette manière ;
(S4) guidage des impulsions laser de telle sorte que leurs points d'incidence entourent au moins partiellement la région de la paroi de boîtier servant de couvercle de soupape (6), et par conséquent
(S5) formation d'affaiblissements de matériau (9) dans la périphérie de la région servant de couvercle de soupape (6), **caractérisé en ce que** les affaiblissements de matériau (9) sont formés de manière espacée les uns des autres, la distance entre les centres d'affaiblissements de matériau adjacents (9) étant inférieure à 5 mm, de préférence se situant entre 0,4 et 0,7 mm, de manière encore plus préférée se situant entre 0,5 et 0,6 mm.
